# EUROPÄISCHE PATENTSCHRIFT

(11) **EP 0 895 071 B1**
(45) Veröffentlichungstag und Bekanntmachung des Hinweises auf die Patenterteilung: **03.11.2004**
(21) Anmeldenummer: 98112790.5
(22) Anmeldetag: 09.07.1998
(51) Int. Cl.: G01G 23/37, G09F 9/30, G09F 9/35

(54) **Verfahren und Vorrichtung zur Sichtdarstellung von Wägedaten**
Method and apparatus for visual presentation of weighing data
Méthode et appareil pour la répresentation visuelle de données de poids

(30) Priorität: 29.07.1997 DE 19732659
(43) Veröffentlichungstag der Anmeldung: 03.02.1999
(73) Patentinhaber: Mettler-Toledo (Albstadt) GmbH, 72458 Albstadt (DE)
(72) Erfinder: Koch, Bernhard, 72365 Ratshausen (DE); Braun, Rolf, 72469 Messstetten (DE); Hermann, Bernhard, 72355 Schömberg (DE)
(74) Vertreter: Patentanwälte Leinweber & Zimmermann

(56) Entgegenhaltungen:
- DE-A- 2 844 769
- LU-A- 84 384
- US-A- 4 688 898

## Beschreibung

Die Erfindung betrifft ein Verfahren zur Sichtdarstellung von Gewichtsdaten enthaltenden Wägedaten, bei dem mit einer Wägevorrichtung erzeugte Gewichtsdaten an eine Steuereinrichtung angelegt werden und einzelne Anzeigeelemente einer Anzeigeeinrichtung gemäß einem von der Steuereinrichtung erzeugten Ansteuermuster zur Sichtdarstellung der Wägedaten in Form von deren Informationsinhalt wiedergebenden Symbolen angesteuert werden sowie eine zur Ausführung dieses Verfahrens betreibbare Vorrichtung.

Derartige Verfahren und Vorrichtungen werden beispielsweise zur Sichtdarstellung von Wägedaten mit Hilfe von Anzeigeeinrichtungen in Form von üblichen Digitalanzeigen verwendet. Dabei können nach unterschiedlichen physikalischen Prinzipien arbeitende Digitalanzeigen zum Einsatz kommen, wie z. B. Fluoreszenzanzeigen, LED-Anzeigen, LCD-Anzeigen, EL-Anzeigen, Kathodenstrahlröhren usw. Zur Sichtdarstellung der den Informationsinhalt der Wägedaten wiedergebenden Symbole sind dabei im wesentlichen zwei Verfahren bekannt:

Beim ersten Verfahren werden Anzeigeeinrichtungen mit strichförmigen Anzeigeelementen zum Aufbau der Symbole benutzt. Als Beispiel für derartige Anzeigeeinrichtungen können 7-Segmentanzeigen zur Sichtdarstellung von numerischen Zeichen und 14-Segmentanzeigen für eine volle alphanumerische Darstellung genannt werden. Mit diesen Anzeigeeinrichtungen werden die Symbole üblicherweise in einer Anzeigezeile wiedergegeben. Mehrzeilige Darstellungen können durch Aneinanderreihen mehrerer derartiger Anzeigeeinrichtungen realisiert werden. Sonderzeichen können mit diesem Verfahren nur unter Verwendung von kundenspezifisch hergestellten Anzeigeeinrichtungen dargestellt werden. Derartige Verfahren sind beispielsweise in der DE 35 04 052 A1 angegeben.

Beim zweiten Verfahren werden den Informationsinhalt der darzustellenden Wägedaten wiedergebende Symbole aus Anzeigeelementen in Form von einzelnen Punkten einer Punktmatrix aufgebaut. Dazu wird jedem anzuzeigenden Symbol eine üblicherweise in Form eines zusammenhängenden, beispielsweise aus 5 x 7 Punkten bestehenden Anzeigeblocks zusammengefaßte, vorgegebene Teilmenge der zur Verfügung stehenden Matrixpunkte, zugeordnet. Zur Ausführung dieses Verfahrens können ein- und mehrzeilige Darstellungen erlaubende Anzeigeeinrichtungen eingesetzt werden. Wenn der Punktabstand zwischen den einzelnen zur Darstellung der Symbole verwendeten Anzeigeblöcken nicht größer ist als innerhalb eines derartigen Anzeigeblocks, entsteht ein homogenes Punktraster, das auch die Anzeige von graphischen Symbolen und Sonderzeichen erlaubt.

Beim Betrieb moderner Wägevorrichtungen, insbesondere bei Industriewaagen, müssen neben den damit ermittelten Gewichtsdaten häufig auch noch weitere zur vollständigen Beschreibung des Wägevorgangs benötigte Daten mit Hilfe der Anzeigeeinrichtung angezeigt werden, wie z. B. den Typ des gerade gewogenen Produktes bezeichnende Daten, eine Bezeichnung der zur Ausführung des jeweiligen Wägevorgangs benutzten Wägezelle, die Anzahl der zu einem Gewichtswert gehörenden Produkte, ein Tarawert usw. Zur Sichtdarstellung dieser zahlreichen Informationen mit Hilfe der Anzeigeeinrichtung werden die Wägedaten üblicherweise in eine Mehrzahl von Datenfeldern unterteilt, wobei in den einzelnen Datenfeldern jeweils eine der darzustellenden Informationen bezeichnende Daten enthalten sind. Zur Sichtdarstellung der Daten wird dann üblicherweise ein Ansteuermuster der einzelnen Anzeigeelemente erzeugt, mit dem jedem Datenfeld ein eine vorgegebene Teilmenge der Anzeigeelemente enthaltendes Anzeigefeld der zur Verfügung stehenden Anzeigefläche zugeordnet wird. Auf diese Weise kann sichergestellt werden, daß die einzelnen zur Beschreibung des Wägevorgangs benötigten Wägedaten in gleichbleibenden Anzeigefeldern der zur Verfügung stehenden Anzeigefläche dargestellt werden. Mit einer Zunahme der anzuzeigenden Informationen wird bei diesem Anzeigeverfahren jedoch die Ablesbarkeit der einzelnen Informationen verschlechtert, weil für deren Darstellung jeweils nur noch ein kleines Anzeigefeld zur Verfügung gestellt werden kann.

Angesichts dieser Probleme im Stand der Technik liegt der Erfindung die Aufgabe zugrunde, ein eine einfache Ablesung einer Vielzahl von Informationen ermöglichendes Verfahren zur Sichtdarstellung von zur Beschreibung eines Wägevorgangs benötigten Wägedaten anzugeben und eine zur Ausführung eines derartigen Verfahrens betreibbare Vorrichtung bereitzustellen.

Diese Aufgabe wird durch die im kennzeichnenden Teil des Patentanspruchs 1 angegebenen Weiterbildung der bekannter Verfahren gelöst.

Diese Lösung geht auf die Erkenntnis zurück, daß neben den zur Darstellung der den Wägevorgang beschreibenden Wägedaten angezeigten Symbolen selbst auch noch deren Darstellungsform als Informationsträger verwendet werden kann. Auf diese Weise können in ein und demselben Anzeigefeld mehrere Informationsinhalte dargestellt werden, nämlich der durch die dort angezeigten Symbole wiedergegebene Informationsinhalt und der durch die jeweilige Darstellungsform wiedergegebene Informationsinhalt. Insgesamt kann so die Größe der zur Darstellung jeweils einer der darzustellenden Informationen zur Verfügung stehenden Anzeigefelder ohne Beeinträchtigung der insgesamt darstellbaren Informationsmenge erhöht werden, wodurch letztlich die Ablesbarkeit der Anzeigeeinrichtung verbessert wird.

Dabei werden die Symbole erfindungsgemäß in der geänderten Darstellungsform, zweckmäßigerweise unter Verwendung einer erhöhten Anzahl von Anzeigeelementen vergrößert dargestellt werden. Dazu ist es besonders zweckmäßig, wenn die darzustellenden Wägedaten in eine Mehrzahl von Datenblöcken unterteilt sind, gemäß einem ersten von der Steuereinrichtung erzeugbaren Ansteuermuster jedem Datenblock eine, vorzugsweise in einem jeweiligen Anzeigeblock zusammengefaßte, vorgegebene Teilmenge von Anzeigeelementen zur Sichtdarstellung der darin enthaltenen Wägedaten zugeordnet wird und mindestens einem der Datenblöcke gemäß einem zweiten von der Steuereinrichtung erzeugbaren Ansteuermuster eine sich von der diesem Datenblock gemäß dem ersten Ansteuermuster zugeordneten Teilmenge unterscheidende geänderte Teilmenge mit einer größeren Anzahl von Anzeigeelementen zugeordnet wird.

Die geänderte Teilmenge kann dabei die vorgegebene Teilmenge zumindest teilweise enthalten. Auf diese Weise können die eingangs erläuterten Vorteile bekannter Verfahren zur Sichtdarstellung von Wägedaten beibehalten werden, wobei zur Erzeugung des geänderten Ansteuermusters lediglich eine neue Zuordnung der zur Verfügung stehenden Anzeigeelemente zu den die darzustellenden Daten enthaltenden Datenblöcken erfolgen muß. Die Ablesbarkeit kann dabei optimiert werden, wenn die Anzahl der Anzeigeelemente der geänderten Teilmenge in Abhängigkeit von der Menge der zur Sichtdarstellung des Informationsinhaltes gemäß dem geänderten Ansteuermuster darzustellenden Wägedaten benötigten Symbole ermittelt wird.

Eine zumindest teilweise Beibehaltung eines für die Darstellung bestimmter Wägedaten vorgesehenen Anzeigefeldes bei Verwendung unterschiedlicher Ansteuermuster kann erreicht werden, wenn ein vorgegebenes, eine Anzahl von Anzeigeelementen enthaltendes erstes Anzeigefeld gemäß allen von der Steuereinrichtung erzeugbaren Ansteuermustern einem mindestens einen der Datenblöcke enthaltenden, vorgegebenen Datenfeld zugeordnet wird. Da üblicherweise in allen Betriebszuständen einer Wägevorrichtung zumindest die damit ermittelten Gewichtsdaten anzuzeigen sind, ist es besonders vorteilhaft, wenn das vorgegebene Datenfeld die Gewichtsdaten enthält.

Mit dem erfindungsgemäßen Verfahren können neben den Wägedaten auch noch weitere Zusatzdaten wie z. B. Beschriftungen für Funktionstasten der Wägevorrichtung u. dgl., dargestellt werden. Dazu ist es besonders zweckmäßig, wenn ein vorgegebenes, eine Anzahl von Anzeigeelementen enthaltendes zweites Anzeigefeld gemäß einer Mehrzahl von der Steuereinrichtung erzeugbaren Ansteuermustern einem Datenfeld zugeordnet wird, das die sich von den Wägedaten unterscheidenden Daten enthält. Dabei kann auch vorgesehen sein, daß das zweite Anzeigefeld gemäß weiteren Ansteuermustern anderen Datenfeldern, wie zum Beispiel dem die Gewichtsdaten enthaltenden Anzeigefeld zugeordnet wird. Derartige Ansteuermuster können beispielsweise dann gewählt werden, wenn die ansonsten zu beschriftenden Funktionstasten nicht aktiviert sind.

Die die Erzeugung der unterschiedlichen Ansteuermuster veranlassenden Steuersignale können über eine Eingabeeinrichtung der Wägevorrichtung, wie z. B. eine Tastatur, über eine Schnittstelle der Wägevorrichtung von einem Zusatzgerät an die Steuereinrichtung oder von der Waage selbst angelegt werden.

Wie der vorstehenden Beschreibung zu entnehmen ist, weist eine zur Ausführung des erfindungsgemäßen Verfahrens geeignete Vorrichtung eine von einer Wägezelle abgegebene und das Gewicht einer diese beaufschlagenden Last darstellende Gewichtsdaten empfangende Steuereinrichtung und eine eine Mehrzahl von Anzeigeelementen aufweisende Anzeigeeinrichtung auf, wobei die Steuereinrichtung zum Erzeugen eines die Sichtdarstellung der Wägedaten in Form von deren Informationsinhalt wiedergebenden Symbolen veranlassenden Ansteuermusters für die Anzeigeelemente ausgelegt ist und ansprechend auf daran angelegte Steuersignale zum Erzeugen von mindestens zwei den Informationsinhalt der darzustellenden Daten in zwei sich voneinander unterscheidenden Darstellungsformen veranlassenden Ansteuermustern betreibbar ist, wobei in einer geänderten Darstellungsform mindestens eines der Symbole vergrößert dargestellt wird.

Nachstehend wird die Erfindung unter Bezugnahme auf die Zeichnung, auf die hinsichtlich aller erfindungswesentlichen und in der Beschreibung nicht weiter herausgestellten Einzelheiten ausdrücklich verwiesen wird, erläutert. In der Zeichnung zeigt:
- Fig. 1: ein Blockdiagramm einer erfindungsgemäßen Vorrichtung,
- Fig. 2: eine perspektivische Darstellung einer Ausführungsform einer erfindungsgemäßen Vorrichtung,
- Fig. 3: eine die Grundfunktion einer erfindungsgemäßen Vorrichtung veranschaulichende Darstellung,
- Fig. 4: eine eine Anzahl von Zusatzfunktionen einer erfindungsgemäßen Vorrichtung veranschaulichende Darstellung und
- Fig. 5: ein Flußdiagramm zur Erläuterung des erfindungsgemäßen Verfahrens.

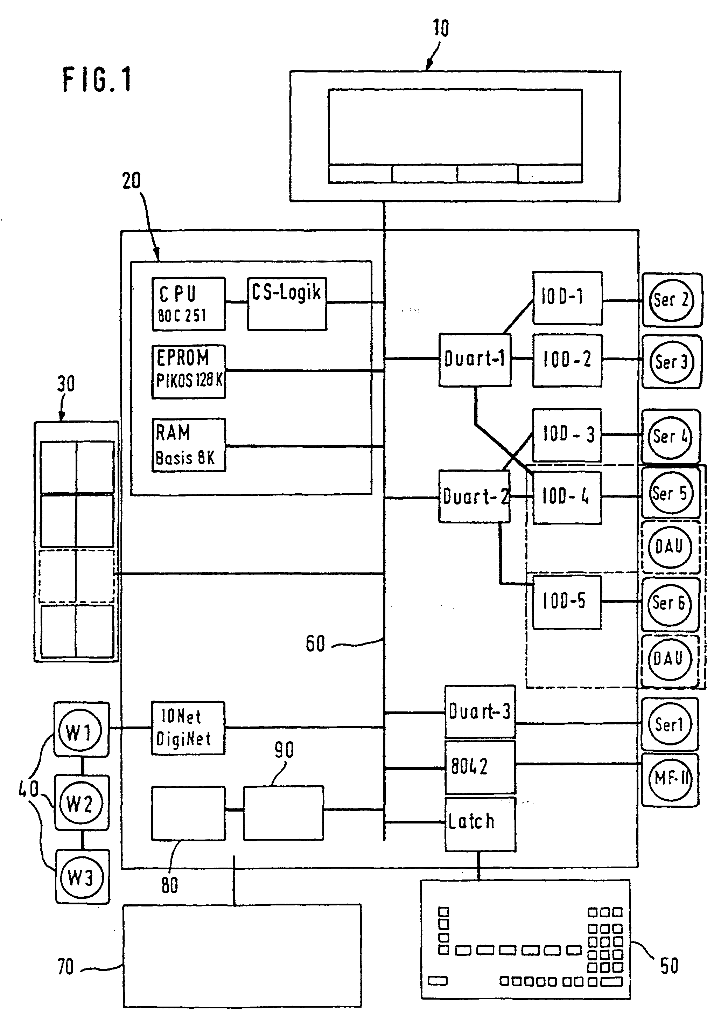

Die in Fig. 1 dargestellte Ausführungsform einer erfindungsgemäßen Vorrichtung weist als wesentliche Elemente eine Anzeigeeinrichtung 10, eine Steuereinrichtung 20, insgesamt drei zum Anschließen jeweils einer Waage ausgelegte Waagenanschlüsse 40 sowie eine Eingabetastatur (Eingabeeinrichtung) 50 auf. Diese Bauelemente sind über einen Systembus 60 miteinander verbunden. Die Waagenanschlüsse 40 sind jeweils zum Anschließen von Waagen mit mehreren, beispielsweise vier Wägezellen ausgelegt. Daneben sind an den Systembus 60 auch noch ein Speichermodul 30, eine aus einem Netzteil 70, einer Netzteilüberwachungseinrichtung 80 und einer Notstromversorgung 90 bestehende Leistungsversorgungseinrichtung, insgesamt sechs serielle Schnittstellen Ser1 bis Ser6, zwei Schnittstellen zum Ausgeben analoger Signale DAU und eine zum Anschließen einer externen Tastatur ausgelegte Schnittstelle MF-II angeschlossen. Das Speichermodul 30 ist in insgesamt 8 Speicherbereiche unterteilt, in denen u. a. zu jeweils einem Ansteuermuster gehörende Ansteuerdaten für die Anzeigeeinrichtung 10 abgelegt sind. Daneben ist im Speichermodul 30 auch noch die zum Betreiben der Vorrichtung benötigte Software abgelegt.

Während des Betriebs der in Fig. 1 dargestellten Vorrichtung werden über die Waagenanschlüsse 40 und den Systembus 60 mit Wägezellen (nicht dargestellt) ermittelte Gewichtsdaten an die Steuereinrichtung 20 angelegt. Über die Eingabetastatur 50 und/oder die Schnittstellen Ser1 bis Ser6 und MF-II können weitere Wägedaten und Steuersignale an die Steuereinrichtung 20 angelegt werden. Anhand der Steuersignale wird mit der Steuereinrichtung 20 ermittelt, welche der angelegten Wägedaten mit der Anzeigeeinrichtung 10 darzustellen sind und welches der von der Steuereinrichtung 20 erzeugbaren Ansteuermuster dazu zu verwenden ist. Im Anschluß daran wird das gewählte Ansteuermuster auf Grundlage der darzustellenden Wägedaten und der in dem entsprechenden Bereich des Speichermoduls abgelegten Daten erzeugt und an die Anzeigeeinrichtung 10 angelegt, um so die Sichtdarstellung der darzustellenden Daten in der gewünschten Darstellungsform zu veranlassen.

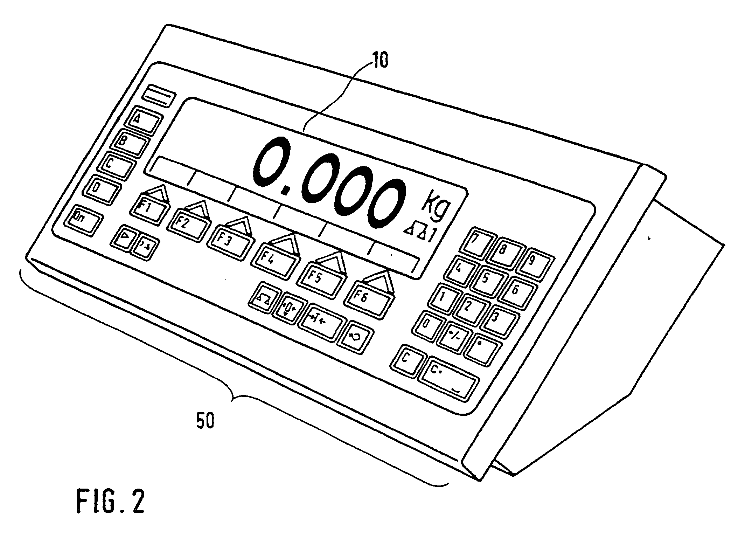

Wie der Darstellung eines eine Ausführungsform einer erfindungsgemäßen Vorrichtung bildenden Industriewaagen-Terminals in Fig. 2 zu entnehmen ist, können alle in Fig. 1 dargestellten Bauelemente in einer Baueinheit zusammengefaßt werden. Die Tastatur des in Fig. 2 dargestellten Terminals weist sechs nebeneinander und unmittelbar unter der Anzeigeeinrichtung 10 angeordnete Funktionstasten F1-F6 auf, deren Beschriftung mit Hilfe der Anzeigeeinrichtung 10 erfolgen kann.

Bei der Anzeigeeinrichtung 10 des in Fig. 2 dargestellten Terminals handelt es sich um eine Punktmatrix-Fluoreszenzanzeige mit den folgenden Merkmalen:

| | |
|---|---|
| Anzahl der Punkte | 170 x 40 |
| Rastermaß | horizontal 1,15 mm, vertikal 1,15 mm |
| Punktgröße | 0,85 mm x 0,85 mm |
| Anzeigegröße | 195,2 x 45,7 mm |
| Farbe der Anzeige | grün |

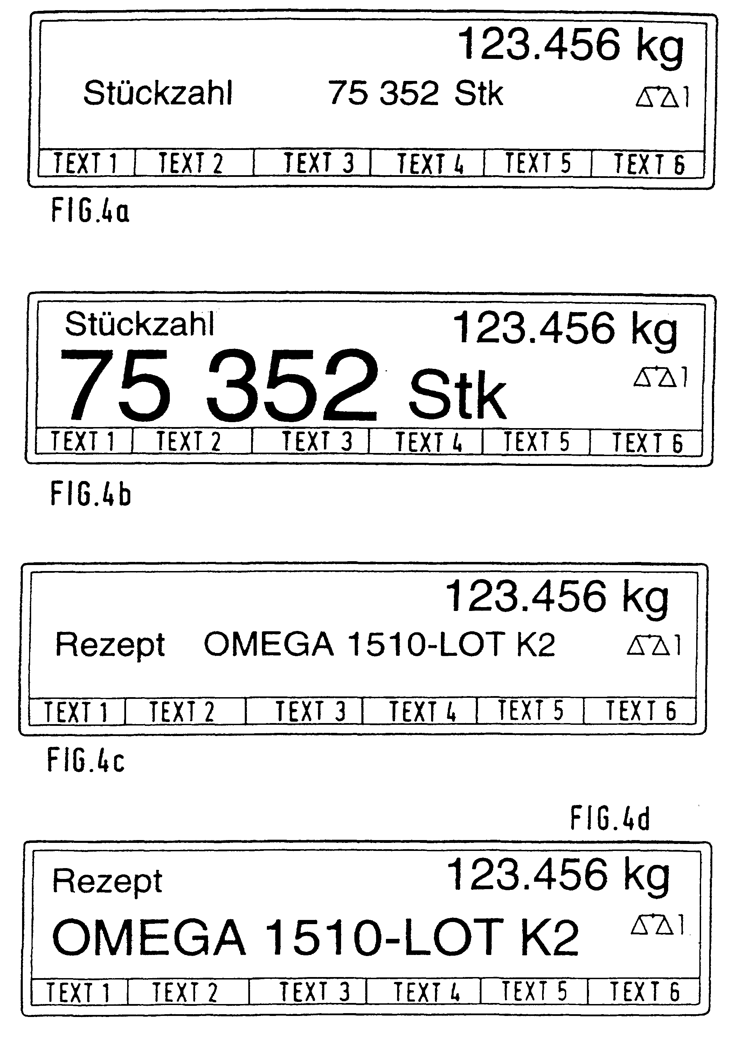

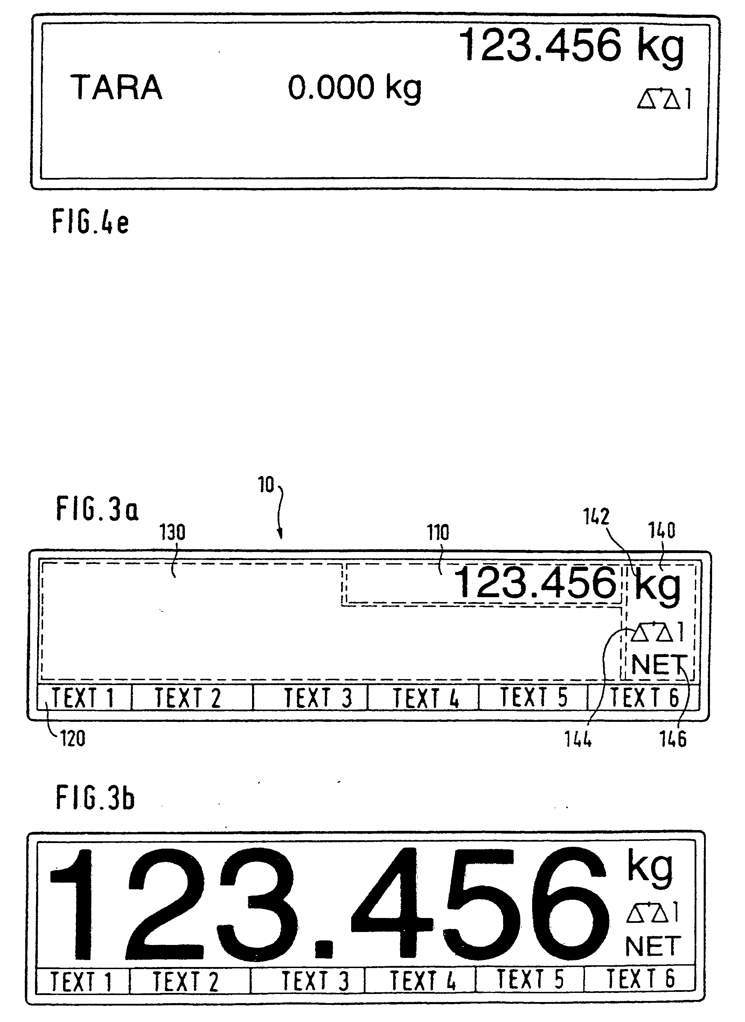

Wie Fig. 3 zu entnehmen ist, ist die Punktmatrix der Anzeigeeinrichtung 10 in insgesamt vier Anzeigefelder unterteilt, nämlich ein erstes eine erste festgelegte Teilmenge der Matrixpunkte enthaltendes Anzeigefeld 110, ein eine zweite festgelegte Teilmenge der Matrixpunkte enthaltendes zweites Anzeigefeld 120, das zur Darstellung von Beschriftungen für die Funktionstasten F1-F6 der Eingabetastatur 50 reserviert ist, ein eine weitere festgelegte Anzahl von Matrixpunkten enthaltendes drittes Anzeigefeld 140, das zur Sichtdarstellung vorgegebener Wägedaten reserviert ist, und ein viertes zur Sichtdarstellung weiterer Wägedaten vorgesehenes Anzeigefeld 130, das die größte Anzahl von Matrixpunkten enthält.

Bei der anhand der Zeichnung erläuterten Ausführungsform der Erfindung wird das erste Anzeigefeld 110 gemäß allen mit der Steuereinrichtung 20 erzeugbaren Ansteuermustern zur Darstellung der mit einer der Wägezellen erzeugten Gewichtsdaten verwendet. Im dritten Anzeigefeld 140 werden die zum dargestellten Gewichtswert gehörende Gewichtseinheit darstellende Symbole 142, die gerade verwendete Wägezelle identifizierende Symbole 144 sowie den Wägebetrieb näher charakterisierende Symbole 146 dargestellt. Im vorliegenden Fall wird durch die Symbolfolge NET beispielsweise dargestellt, daß es sich bei dem dargestellten Gewichtswert um einen Nettowert handelt, der durch Subtrahieren eines vorgegebenen Tarawerts von dem mit der Wägezelle ermittelten Gewichtswert erhalten wurde. Anstelle der den Gewichtswert darstellenden Symbole 142 kann gemäß einem geänderten Ansteuermuster auch eine als Bewegungsindikator dienende "Tilde" dargestellt werden. Beim vierten Anzeigefeld 130 der Punktmatrix handelt es sich um ein variables Anzeigefeld, in dem weitere Wägedaten, wie z. B. der Tarawert, eine zum dargestellten Gewichtswert gehörende Stückzahl oder das gerade gewogene Produkt näher charakterisierende Symbole dargestellt werden können.

Falls das vierte Anzeigefeld 130 der Punktmatrix nicht zur Sichtdarstellung weiterer Daten benötigt wird, kann mit der Steuereinrichtung 20 ansprechend auf ein entsprechendes Steuersignal ein geändertes Ansteuermuster für die Anzeigeeinrichtung 10 erzeugt werden, um die in Fig. 3a im ersten Anzeigefeld 110 dargestellten Gewichtsdaten unter Ausnutzung der vollständigen Fläche des ersten Anzeigefeldes 110 und des vierten Anzeigefeldes 130 in einer geänderten, nämlich vergrößerten Darstellungsform anzuzeigen, wie in Fig. 3b zu sehen ist. Dabei bleibt das zweite Anzeigefeld 120 zur Sichtdarstellung der Beschriftungen der Funktionstasten F1-F6 und das dritte Anzeigefeld 140 zur Sichtdarstellung der vorgegebenen Wägedaten reserviert.

Falls das variable vierte Anzeigefeld 130 wieder zur Sichtdarstellung anderer Daten benötigt wird, kann mit der Steuereinrichtung 20 ansprechend auf ein entsprechendes Steuersignal wieder das die in Fig. 3a angegebene Darstellungsform der Gewichtsdaten hervorbringende Ansteuermuster erzeugt und an die Anzeigeeinrichtung 10 angelegt werden.

Gemäß Fig. 4a kann in dem variablen vierten Anzeigefeld 130 der Anzeigeeinrichtung 10 beispielsweise eine zum dargestellten Gewichtswert gehörende Stückzahl angezeigt werden. Dabei kann ansprechend auf ein entsprechendes Steuersignal mit der Steuereinrichtung 20 ein Ansteuermuster erzeugt werden, mit dem die in Fig. 4b angegebene vergrößerte Darstellung der Stückzahl im vierten Anzeigefeld 130 erzeugt wird. Auf ähnliche Weise kann, wie in den Fig. 4c und 4d angegeben ist, auch eine das zum dargestellten Gewichtswert gehörende Produkt beschreibende Information in unterschiedlichen Darstellungsformen im variablen Anzeigefeld 130 angezeigt werden. Aufgrund der großen Anzahl der zur Produktbeschreibung benötigten symbole wird dabei selbst bei der vergrößerten Darstellung gemäß Fig. 4d) automatisch ein Teil der Produktbeschreibung in kleinerer Symbolgröße angezeigt. Ferner kann gemäß Fig. 4e) im variablen Anzeigefeld 130 auch noch ein über die Eingabetastatur 50 eingegebener Tarawert dargestellt werden. Dabei können die Beschriftungen für die Funktionstasten F1-F6 im zweiten Anzeigefeld 120, wie in Fig. 4e) dargestellt, ausgeblendet werden, weil diese Funktionstasten bei der Eingabe des Tarawertes nicht benötigt werden.

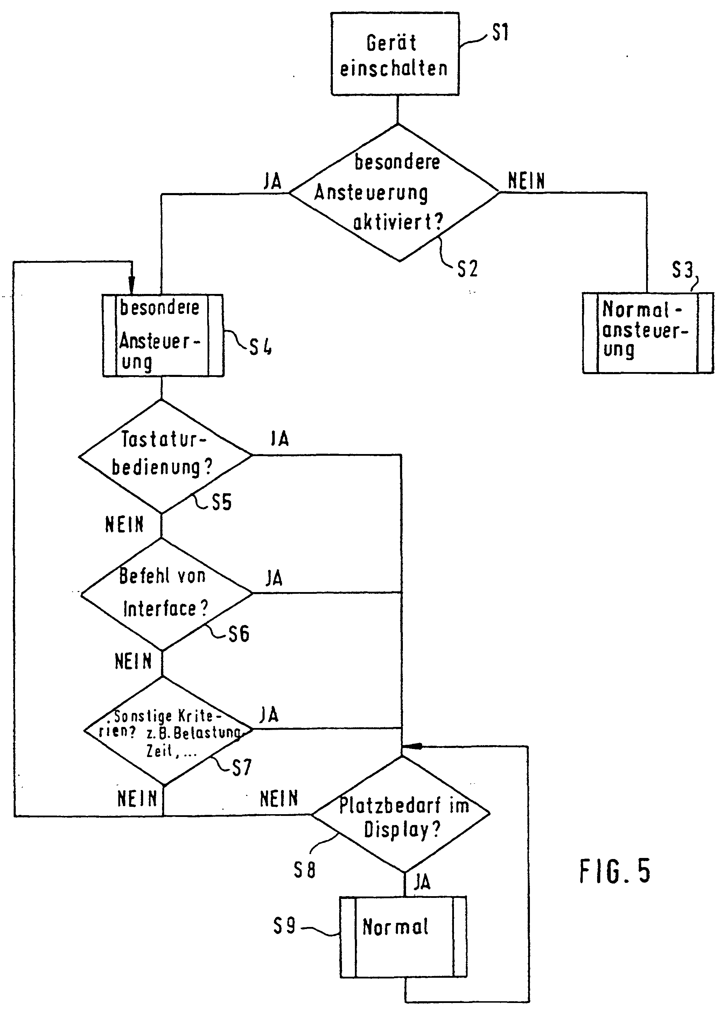

Gemäß dem in Fig. 5 dargestellten Flußdiagramm wird zum Ausführen eines erfindungsgemäßen Verfahrens mit einem Terminal der in Fig. 2 dargestellten Art nach Einschalten des Terminals in einem Schritt S1 in einem Schritt S2 zunächst geprüft, ob bereits ein die Darstellung von Gewichtsdaten in der in Fig. 3b) dargestellten besonderen Darstellungsform veranlassendes Ansteuermuster für die Anzeigeeinrichtung 10 aktiviert ist. In diesem Fall fährt das Verfahren mit Schritt S4 fort, in dem eine diese besondere Darstellung veranlassendes Ansteuermuster erzeugt wird. Andernfalls wird die Anzeigeeinrichtung 10 im Schritt S3 zur Darstellung der Gewichtsdaten in der in Fig. 3a) angegebenen normalen Darstellungsform angesteuert. Nach Ansteuerung der Anzeigeeinrichtung zur Sichtdarstellung der Gewichtsdaten in der besonderen Darstellungsform im Schritt S4 wird in den Schritten S5 bis S7 fortlaufend überwacht, ob über eine Bedienung der Eingabetastatur 50, eine der Schnittstellen oder in anderer Form, beispielsweise in Form der von den Wägezellen abgegebenen Gewichtsdaten oder der nach Beginn eines Wägevorgangs oder einer Eingabe über die Tastatur oder eine der Schnittstellen verstrichenen Zeit ein Steuersignal an die Steuereinrichtung 20 angelegt wird. Falls ein Steuersignal anliegt wird im Schritt S8 überprüft, ob im vierten Anzeigefeld 130 Platz zur Sichtdarstellung weiterer Wägedaten benötigt wird. In diesem Fall wird im Schritt S9 das Ansteuerungsmuster für die Anzeigeeinrichtung 10 so geändert, daß die Gewichtsdaten in der in Fig. 3a) angegebenen Darstellungsform im ersten Anzeigefeld 110 angezeigt werden.

Neben den anhand der Zeichnung dargestellten Funktionen können mit dem erfindungsgemäßen Verfahren durch Erzeugung entprechender Ansteuermuster auch noch große Zahlen durch ein beliebiges Tausender-Trennzeichen, z. B. einen Punkt oder einen Abstand, in Dreierblöcke aufgeteilt werden, wodurch die Ablesbarkeit dieser Zahlen deutlich verbessert wird. Ferner kann die erfindungsgemäße Vorrichtung natürlich nicht nur zur Sichtdarstellung numerischer bzw. alphanumerischer Symbole sondern auch zur Sichtdarstellung anderer Informationen, wie z. B. von Graphiken genutzt werden. Schließlich ist die Erfindung auch nicht auf die Verwendung von Punktmatrix-Fluoreszenzanzeigen beschränkt. Vielmehr können alle eingangs erläuterten und andere verfügbaren Display-Technologien zur Durchführung des erfindungsgemäßen Verfahrens bzw. zur Herstellung einer erfindungsgemäßen Vorrichtung eingesetzt werden.

## Patentansprüche

1. Verfahren zur Sichtdarstellung von Gewichtsdaten enthaltenden Wägedaten, bei dem mit einer Wägevorrichtung erzeugte Gewichtsdaten an eine Steuereinrichtung angelegt werden und einzelne Anzeigeelemente einer Anzeigeeinrichtung gemäß einem von der Steuereinrichtung erzeugten Ansteuermuster zur Sichtdarstellung der Wägedaten in Form von deren Informationsinhalt wiedergebenden Symbolen angesteuert werden, wobei mit der Steuereinrichtung ansprechend auf ein daran angelegtes Steuersignal ein die Sichtdarstellung der den Informationsinhalt der Wägedaten in einer geänderten Darstellungsform veranlassendes, geändertes Ansteuermuster erzeugt wird, **dadurch gekennzeichnet, daß** in der geänderten Darstellungsform mindestens eines der Symbole vergrößert dargestellt wird.

2. Verfahren nach Anspruch 1, **dadurch gekennzeichnet, daß** durch die vergrößert dargestellten Symbole die gesamte nicht zur Sichtdarstellung der übrigen Symbole benötigte Anzeigefläche ausgenutzt wird.

3. Verfahren nach Anspruch 1 oder 2, **dadurch gekennzeichnet, daß** die darzustellenden Wägedaten in eine Mehrzahl von Datenblöcken unterteilt sind und gemäß einem ersten von der Steuereinrichtung erzeugbaren Ansteuermuster jedem Datenblock eine vorzugsweise in einem jeweiligen Anzeigeblock zusammengefaßte, vorgegebene Teilmenge der Anzeigeelemente zur Sichtdarstellung der darin enthaltenen Wägedaten zugeordnet wird.

4. Verfahren nach Anspruch 3, **dadurch gekennzeichnet, daß** mindestens einem der Datenblöcke gemäß einem zweiten von der Steuereinrichtung erzeugbaren Ansteuermuster eine sich von der diesem Datenblock gemäß dem ersten Ansteuermuster zugeordneten, vorgegebenen Teilmenge unterscheidende geänderte Teilmenge der Anzeigeelemente zugeordnet wird.

5. Verfahren nach Anspruch 4, **dadurch gekennzeichnet, daß** die geänderte Teilmenge mehr Anzeigeelemente aufweist als die vorgegebene Teilmenge.

6. Verfahren nach Anspruch 4 oder 5, **dadurch gekennzeichnet, daß** die geänderte Teilmenge die vorgegebene Teilmenge zumindest teilweise enthält.

7. Verfahren nach einem der Ansprüche 4 bis 6, **dadurch gekennzeichnet, daß** die Anzahl der Anzeigeelemente der geänderten Teilmenge in Abhängigkeit von der Menge der zur Sichtdarstellung des Informationsinhalts der gemäß dem geänderten Ansteuermuster darzustellenden Wägedaten benötigten Symbole ermittelt wird.

8. Verfahren nach einem der Ansprüche 3 bis 7, **dadurch gekennzeichnet, daß** ein vorgegebenes, eine Anzahl von Anzeigeelementen enthaltendes erstes Anzeigefeld gemäß allen von der Steuereinrichtung erzeugbaren Ansteuermustem einem mindestens eines der Datenblöcke enthaltenden, vorgegebenen Datenfeld zugeordnet ist.

9. Verfahren nach Anspruch 8, **dadurch gekennzeichnet, daß** das vorgegebene Datenfeld die Gewichtsdaten enthält.

10. Verfahren nach einem der vorhergehenden Ansprüche, **dadurch gekennzeichnet, daß** ein vorgegebenes, eine Anzahl von Anzeigeelementen enthaltendes zweites Anzeigefeld gemäß mindestens einem von der Steuereinrichtung erzeugbaren Ansteuermustem einem Datenfeld zugeordnet wird, das sich von den Wägedaten unterscheidende Zusatzdaten enthält.

11. Verfahren nach einem der vorhergehenden Ansprüche, **dadurch gekennzeichnet, daß** die Steuersignale über eine Eingabeeinrichtung der Wägevorrichtung an die Steuereinrichtung angelegt werden.

12. Verfahren nach einem der vorhergehenden Ansprüche, **dadurch gekennzeichnet, daß** die Steuersignale über eine Schnittstelle der Wägevorrichtung von einem Zusatzgerät an die Steuereinrichtung angelegt werden.

13. Verfahren nach einem der vorhergehenden Ansprüche, **dadurch gekennzeichnet, daß** gemäß dem geänderten Ansteuermuster zumindest eines der den Informationsinhalt der Wägedaten wiedergebenden Symbole durch ein anderes Symbol ersetzt wird.

14. Vorrichtung zur Sichtdarstellung von einen Wägevorgang beschreibenden und mindestens einen Gewichtswert darstellenden Wägedaten mit einer von einer Wägezelle abgegebene und die das Gewicht einer diese beaufschlagenden Last darstellende Gewichtsdaten empfangenden Steuereinrichtung (20) und einer eine Mehrzahl von Anzeigeelementen aufweisenden Anzeigeeinrichtung (10), wobei die Steuereinrichtung (20) zum Erzeugen eines die Sichtdarstellung der Wägedaten in Form von deren Informationsinhalt wiedergebenden Symbolen veranlassenden Ansteuermusters für die Anzeigelemente ausgelegt ist, wobei die Steuereinrichtung (20) ansprechend auf daran angelegte Steuersignale zum Erzeugen eines die Sichtdarstellung des Informationsinhalts der Wägedaten in einer geänderten Darstellungsform veranlassenden Ansteuermusters betreibbar ist, **dadurch gekennzeichnet, daß** in der geänderten Darstellungsform mindestens eines der Symbole vergrößert darstellbar ist

15. Vorrichtung nach Anspruch 14, **gekennzeichnet durch** eine eine Mehrzahl von mit der Steuereinrichtung (20) verbundenen Wägezellen, wobei die Steuereinrichtung (20) zur die Sichtdarstellung der damit ermittelten Gewichtsdaten veranlassenden Ansteuerung der Anzeigeeinrichtung (10) betreibbar ist.

16. Vorrichtung nach Anspruch 14 oder 15, **gekennzeichnet durch** mindestens eine Schnittstelle (Ser1-Ser6, DAU, MF-II) über die die Steuersignale von einem Zusatzgerät an die Steuereinrichtung (20) anlegbar sind.

17. Vorrichtung nach einem der Ansprüche 14 bis 16, **gekennzeichnet durch** eine Eingabeeinrichtung (50) mit der die Steuersignale an die Steuereinrichtung (20) anlegbar sind.

18. Vorrichtung nach einem der Ansprüche 14 bis 16, **dadurch gekennzeichnet, daß** die Anzeigeeinrichtung ein Punktmatrix-Display (10) aufweist.

19. Vorrichtung nach Anspruch 18, **dadurch gekennzeichnet, daß** das Punktmatrixdisplay (20) ein VFD-Display aufweist.

## Claims

1. Method of visually displaying weighing data containing weight data, whereby weight data produced by a weighing apparatus are supplied to a control device and individual display elements of a display device are, in accordance with an activation pattern generated by the control device, activated for the purpose of visually displaying the weighing data in the form of symbols representing their information content, wherein a modified activation pattern effecting visual display of the information content of the weighing data in a modified display form is generated by the control device in response to a control signal supplied thereto, **characterized in that** in the modified display form at least one of the symbols is displayed in an enlarged manner.

2. Method according to claim 1, **characterized in that** the symbols displayed in an enlarged manner utilize all of the display area not required for visual display of the remaining symbols.

3. Method according to claim 1 or 2, **characterized in that** the weighing data to be displayed are divided into a plurality of data blocks and, in accordance with a first activation pattern which may be generated by the control device, there is associated with each data block a defined subset, preferably assembled in a respective display block, of the display elements for visual display of the weighing data contained therein.

4. Method according to claim 3, **characterized in that**, in accordance with a second activation pattern which may be generated by the control device, there is associated with at least one of the data blocks a modified subset of the display elements, which differs from the defined subset associated with said data block in accordance with the first activation pattern.

5. Method according to claim 4, **characterized in that** the modified subset comprises more display elements than the defined subset.

6. Method according to claim 4 or 5, **characterized in that** the modified subset at least partially contains the defined subset.

7. Method according to one of claims 4 to 6, **characterized in that** the number of display elements of the modified subset is determined in dependence upon the quantity of symbols required for visual display of the information content of the weighing data to be displayed in accordance with the modified activation pattern.

8. Method according to one of claims 3 to 7, **characterized in that** a defined first display section containing a number of display elements is, in accordance with all of the activation patterns which may be generated by the control device, associated with a defined data field containing at least one of the data blocks.

9. Method according to claim 8, **characterized in that** the defined data field contains the weight data.

10. Method according to one of the preceding claims, **characterized in that** a defined second display section containing a number of display elements is, in accordance with at least one activation pattern which may be generated by the control device, associated with a data field which contains additional data different from the weighing data.

11. Method according to one of the preceding claims, **characterized in that** the control signals are supplied via an input device of the weighing apparatus to the control device.

12. Method according to one of the preceding claims, **characterized in that** the control signals are supplied via an interface of the weighing apparatus by an additional appliance to the control device.

13. Method according to one of the preceding claims, **characterized in that**, in accordance with the modified activation pattern, at least one of the symbols reproducing the information content of the weighing data is replaced by another symbol.

14. Apparatus for visually displaying weighing data which describe a weighing operation and represent at least one weight value, having a control device (20) for receiving weight data, which are output by a load cell and represent the weight of a load acting upon said load cell, and having a display device (10) comprising a plurality of display elements, wherein the control device (20) is designed so as to generate an activation pattern for the display elements, which effects the visual display of the weighing data in the form of symbols reproducing their information content, wherein the control device (20) in response to control signals supplied thereto is operable so as to generate an activation pattern which effects visual display of the information content of the weighing data in a modified display form, **characterized in that** in the modified display form at least one of the symbols is displayable in an enlarged manner.

15. Apparatus according to claim 14, **characterized by** a plurality of load cells connected to the control device (20), wherein the control device (20) is operable so as to achieve the activation of the display device (10) which effects visual display of the weight data determined by said load cells.

16. Apparatus according to claim 14 or 15, **characterized by** at least one interface (Ser1-Ser6, DAU, MF-II), via which the control signals are suppliable by an additional appliance to the control device (20).

17. Apparatus according to one of claims 14 to 16, **characterized by** an input device (50) for supplying the control signals to the control device (20).

18. Apparatus according to one of claims 14 to 16, **characterized in that** the display device comprises a dot matrix display (10).

19. Apparatus according to claim 18, **characterized in that** the dot matrix display (20) comprises a VFD display.

## Revendications

1. Procédé pour la représentation visuelle de données de pesage renfermant des données de poids, dans lequel des données de poids générées par un dispositif de pesage sont appliquées à un dispositif de commande, et des éléments afficheurs individuels d'un dispositif d'affichage sont activés en conformité avec un profil d'activation engendré par le dispositif de commande, en vue de la représentation visuelle des données de pesage sous forme de symboles reflétant le contenu informatif de ces dernières, le dispositif de commande assurant, en réponse à un signal de commande qui lui est appliqué, la génération d'un profil d'activation modifié provoquant, sous une forme représentative modifiée, la représentation visuelle du contenu informatif des données de pesage, **caractérisé par le fait qu'**au moins l'un des symboles est représenté à échelle agrandie sous la forme représentative modifiée.

2. Procédé selon la revendication 1, **caractérisé par le fait que** les symboles représentés à échelle agrandie exploitent toute la surface d'affichage non nécessitée par les symboles restants.

3. Procédé selon la revendication 1 ou 2, **caractérisé par le fait que** les données de pesage devant être représentées sont scindées en une pluralité de blocs de données et, en conformité avec un premier profil d'activation pouvant être généré par le dispositif de commande, on affecte à chaque bloc de données une quantité partielle préétablie des éléments afficheurs, regroupée de préférence en un bloc de données respectif, en vue de la représentation visuelle des données de pesage renfermées par ledit bloc.

4. Procédé selon la revendication 3, **caractérisé par le fait qu'**on affecte à au moins l'un des blocs de données, en conformité avec un second profil d'activation pouvant être généré par le dispositif de commande, une quantité partielle modifiée des éléments afficheurs qui se différencie de la quantité partielle préétablie, affectée à ce bloc de données en conformité avec le premier profil d'activation.

5. Procédé selon la revendication 4, **caractérisé par le fait que** la quantité partielle modifiée comporte davantage d'éléments afficheurs que la quantité partielle préétablie.

6. Procédé selon la revendication 4 ou 5, **caractérisé par le fait que** la quantité partielle modifiée renferme au moins partiellement la quantité partielle préétablie.

7. Procédé selon l'une des revendications 4 à 6, **caractérisé par le fait que** le nombre des éléments afficheurs de la quantité partielle modifiée est établi en fonction de la quantité des symboles nécessités par la représentation visuelle du contenu informatif des données de pesage devant être représentées en conformité avec le profil d'activation modifié.

8. Procédé selon l'une des revendications 3 à 7, **caractérisé par le fait qu'**une première zone d'affichage préétablie renfermant un certain nombre d'éléments afficheurs est affectée, en conformité avec tous les profils d'activation pouvant être générés par le dispositif de commande, à un champ de données préétabli renfermant au moins l'un des blocs de données.

9. Procédé selon la revendication 3, **caractérisé par le fait que** le champ de données préétabli renferme les données de poids.

10. Procédé selon l'une des revendications précédentes, **caractérisé par le fait qu'**une seconde zone d'affichage renfermant un certain nombre d'éléments afficheurs est affectée, en conformité avec au moins un des profils d'activation pouvant être générés par le dispositif de commande, à un champ de données qui renferme des données additionnelles se différenciant des données de pesage.

11. Procédé selon l'une des revendications précédentes, **caractérisé par le fait que** les signaux de commande sont appliqués au dispositif de commande par l'intermédiaire d'un dispositifs d'entrée du dispositif de pesage.

12. Procédé selon l'une des revendications précédentes, **caractérisé par le fait que** les signaux de commande sont appliqués au dispositif de commande par un appareil supplémentaire, par l'intermédiaire d'une interface du dispositif de pesage.

13. Procédé selon l'une des revendications précédentes, **caractérisé par le fait qu'**au moins l'un des symboles reflétant le contenu informatif des données de pesage est remplacé par un autre symbole, en conformité avec le profil d'activation modifié.

14. Appareil pour la représentation visuelle de données de pesage décrivant un processus de pesage et représentant au moins une valeur pondérale, comprenant un dispositif de commande (20) qui reçoit des données de poids fournies par une cellule de pesage et représentatives du poids d'une charge sollicitant ladite cellule, et un dispositif d'affichage (10) comportant une pluralité d'éléments afficheurs, le dispositif de commande (20) étant conçu pour générer un profil d'activation destiné aux éléments afficheurs et provoquant la représentation visuelle des données de pesage sous forme de symboles reflétant le contenu informatif de ces dernières, ledit dispositif de commande (20) pouvant être actionné, en réponse à des signaux de commande qui lui sont appliqués, afin de générer un profil d'activation provoquant la représentation visuelle du contenu informatif des données de pesage sous une forme représentative modifiée, **caractérisé par le fait qu'**au moins l'un des symboles peut être représenté à échelle agrandie sous la forme représentative modifiée.

15. Appareil selon la revendication 14, **caractérisé par** une pluralité de cellules de pesage reliées au dispositif de commande (20), ledit dispositif de commande (20) étant actionnable en vue de l'activation du dispositif d'affichage (10) provoquant la représentation visuelle des données de poids établies par lesdites cellules.

16. Appareil selon la revendication 14 ou 15, **caractérisé par** au moins une interface (Ser1-Ser6, DAU, MF-II) par l'intermédiaire duquel les signaux de commande peuvent être appliqués au dispositif de commande (20), par un appareil supplémentaire.

17. Appareil selon l'une des revendications 14 à 16, **caractérisé par** un dispositif d'entrée (50) par lequel les signaux de commande peuvent être appliqués au dispositif de commande (20).

18. Appareil selon l'une des revendications 14 à 16, **caractérisé par le fait que** le dispositif d'affichage est un affichage (10) à matrice ponctuelle.

19. Appareil selon la revendication 18, **caractérisé par le fait que** l'affichage (10) à matrice ponctuelle est un affichage VFD.
